# EUROPÄISCHE PATENTSCHRIFT

(11) **EP 4 159 373 B1**
(45) Veröffentlichungstag und Bekanntmachung des Hinweises auf die Patenterteilung: **06.11.2024**
(21) Anmeldenummer: 22198442.0
(22) Anmeldetag: 28.09.2022
(51) Int. Cl.: B25B 1/18, B25B 5/06, B23Q 3/08, F15B 15/20

(54) **SPANNSYSTEM MIT EIL- UND KRAFTHUB UND VERFAHREN ZUM BETREIBEN EINES SPANNSYSTEMS**
CLAMPING SYSTEM WITH A QUICK AND FORCE STROKE AND METHOD FOR OPERATING A CLAMPING SYSTEM
SYSTÈME DE SERRAGE DOTÉ D'UNE COURSE RAPIDE ET FORCE ET PROCÉDÉ DE FONCTIONNEMENT D'UN SYSTÈME DE SERRAGE

(30) Priorität: 29.09.2021 DE 102021125272
(43) Veröffentlichungstag der Anmeldung: 05.04.2023
(73) Patentinhaber: Heinz-Dieter Schunk GmbH & Co. Spanntechnik KG, 88512 Mengen (DE)
(72) Erfinder: Siber, Mathias, 72517 Sigmaringendorf (DE); Riedl, Florian, 83607 Holzkirchen (DE); Bachmaier, Georg, 80469 München (DE); Kerber, Ulrich, 82386 Oberhausen (DE)
(74) Vertreter: DREISS Patentanwälte PartG mbB

(56) Entgegenhaltungen:
- EP-A1- 2 412 484
- DE-A1- 1 964 076
- DE-U1- 20 113 625

## Beschreibung

Die Erfindung betrifft ein Spannsystem zum Spannen eines Objekts mit wenigstens einem in einem Gehäuse entlang einer Spannrichtung zwischen einer Öffnungsstellung und einer Anschlagsstellung verfahrbaren Spannelement, wobei das Spannelement in der Anschlagsstellung mit einer Spannkraft beaufschlagbar ist, mit einer Antriebseinheit zur Bereitstellung einer Hubkraft zum Verfahren des Spannelements aus der Öffnungsstellung in die Anschlagsstellung. Die Erfindung betrifft auch ein Verfahren zum Betreiben eines solchen Spannsystems.

Aus dem Stand der Technik sind elektromechanische Spannsysteme mit einem Elektromotor, einem Getriebe mit hoher Übersetzung und einer Gewindespindel bekannt. Dabei wird das Motordrehmoment in eine axiale Kraft umgesetzt, was entweder nur eine schnelle Verfahrbewegung im Eilhub oder nur eine hohe Kraft im Krafthub ermöglicht. Demgegenüber sind pneumatische Spannmittel unter anderem aus der DE 2 920 463 A1 bekannt, welche durch zwei separate Kolben sowohl einen Eilhub als auch einen Krafthub ermöglichen, wobei für den Eilhub und den Krafthub Druckluftleitungen erforderlich sind und gleichermaßen Energie notwendig ist.

Aus der DE2155597A ist ein mit Druckmittel betätigbares Presswerkzeug mit einem Stoppmechanismus im Annäherungshub bei einer unerwünschten Kollision mit einem Hindernis bekannt. Die DE1964076A offenbart Arbeitszylinder mit Eilgangskolben. Die US2007/0227133A1 offenbart einen Zylinderantrieb mit einer innenliegenden Schubstange.

Aus der DE 19 64 076 A1 ist ein Arbeitszylinder mit einem Arbeitskolben und einem Eilgangskolben nach dem Oberbegriff von Anspruch 1 bzw. Anspruch 13 offenbart, wobei eine Druckflüssigkeit in einen Zylinderraum aufgrund einer Druckmittelzuführung strömt, wobei eine einzige Druckmittelquelle vorgesehen ist, und wobei nach Erreichen der Anschlagsstellung der Druck in einem vom Zylinderraum separat ausgebildeten Arbeitszylinderraum erhöht wird.

Die vorliegende Erfindung stellt sich die Aufgabe, ein Spannsystem mit einem Eilhub und einem Krafthub bereitzustellen, welches eine geringe Baugröße, weniger Versorgungsleitungen benötigt sowie eine hohe Leistungsdichte aufweist und energiesparend einsetzbar ist.

Die Aufgabe wird gelöst durch ein Spannsystem mit den Merkmalen des Anspruchs 1. Das Spannsystem sieht insbesondere wenigstens einen Kolben vor, welcher einen mit Fluid befüllbaren ersten Druckraum und einen mit dem ersten Druckraum über eine am oder durch den Kolben verlaufende Verbindungsleitung unmittelbar verbundenen, ebenfalls mit dem Fluid befüllbaren zweiten Druckraum begrenzt. In der Verbindungsleitung ist ein Ventil zum Öffnen und Schließen der Verbindungsleitung angeordnet, wobei das Ventil vorzugsweise am oder im Kolben angeordnet ist. Demnach erfordert die Verbindungsleitung und/oder das Ventil einen geringen Bauraum im Spannsystem und es ist eine geringere Anzahl an Bauteilen erforderlich. Zudem gehen damit geringe Verluste beim Übertragen des Fluids aus dem ersten Druckraum in den zweiten Druckraum oder aus dem zweiten Druckraum in den ersten Druckraum einher.

Beim Verfahren des Spannelements mit der von der Antriebseinheit bereitgestellten Hubkraft strömt Fluid über die Verbindungsleitung aus dem ersten Druckraum in den zweiten Druckraum oder aus dem zweiten Druckraum in den ersten Druckraum. Die Antriebseinheit dient vorzugsweise als Energiespeicher und ist dazu eingerichtet, die Hubkraft bereitzustellen. Zudem ist eine Pumpeneinheit vorgesehen und dazu eingerichtet, bei oder nach Erreichen der Anschlagsstellung den Arbeitsdruck im ersten Druckraum oder im zweiten Druckraum zur Bereitstellung der Spannkraft zu erhöhen. Die Pumpeneinheit erhöht ausgehend von der durch die Antriebseinheit bereitgestellten Hubkraft die Kraft, sodass die Spannkraft bereitgestellt wird, wobei die Spannkraft dann höher als die Hubkraft ausgebildet ist.

Folglich ist jeweils ein eigener Antrieb zum Bereitstellen der Hubkraft und der Spannkraft vorgesehen, wobei diese in Abhängigkeit deren Einsatzes unterschiedlich dimensioniert sein können. Die verschiedenen Antriebe sind dabei unabhängig voneinander dimensionierbar. Ferner führt die Verbindungsleitung zwischen dem ersten Druckraum und dem zweiten Druckraum zu einem verringerten Kraftaufwand für den Eilhub. Zudem ist eine Bereitstellung von Volumenstrom in den ersten Druckraum und/oder in den zweiten Druckraum während des Eilhubs im Wesentlichen nicht erforderlich.

Die Antriebseinheit verlagert das Spannelement derart, dass im ersten Druckraum oder im zweiten Druckraum ein Arbeitsdruck p_{Eilhub} vorliegt. Vor oder in der Anschlagsstellung erhöht die Pumpeneinheit den Arbeitsdruck im ersten Druckraum oder im zweiten Druckraum auf den Arbeitsdruck p_{Krarthub}, wobei die Pumpeneinheit nur den Differenzdruck p_{Krafthub} - p_{Eilhub} bereitstellen muss. Demnach muss die Pumpeneinheit im ersten Druckraum oder im zweiten Druckraum den Arbeitsdruck nur ausgehend von dem bereits durch den Eilhub vorherrschenden Arbeitsdruck erhöhen. Die Bereitstellung der Spannkraft stellt sich folglich als effizienter dar, da in der Anschlagsstellung nicht der gesamte Arbeitsdruck, sondern nur die Differenz aus dem Arbeitsdruck für den Eilhub und den Krafthub aufgebaut werden muss. Ferner zeichnet sich das Spannsystem dadurch aus, dass nur ein geringer Volumenstrom durch die Pumpeneinheit bereitgestellt werden muss, da bereits mittels der Verbindungsleitung zwischen dem ersten Druckraum und dem zweiten Druckraum der für die Verlagerung in die Anschlagsstellung erforderliche Volumenstrom bereitgestellt ist.

Eine vorteilhafte Weiterentwicklung sieht vor, dass die Pumpeneinheit als Mikropumpe, insbesondere als Piezoelement-Pumpe oder Membranpumpe, ausgebildet und im Gehäuse vorgesehen ist. Folglich müssen keine Druckanschlüsse, insbesondere Hydraulikanschlüsse, sondern nur elektrische Anschlüsse für den Krafthub bereitgestellt werden.

Vorteilhafterweise ist das Ventil als Schaltventil oder Rückschlagventil ausgebildet, welches beim Verlagern des Spannelements in die Anschlagsstellung in Richtung des ersten Druckraums oder zweiten Druckraums öffnet und in Richtung des zweiten Druckraums oder des ersten Druckraums schließt.

Folglich kann im Eilhub beim Verfahren in die Anschlagsstellung von dem ersten Druckraum in den zweiten Druckraum oder von dem zweiten Druckraum in den ersten Druckraum Fluid strömen, wohingegen beim Krafthub kein Rückfluss in den anderen Druckraum möglich ist. Wenn das Ventil als Schaltventil ausgebildet ist, dann ist es in eine Öffnungsstellung und eine Schließstellung schaltbar, sodass der Fluidstrom beliebig und zeitlich abhängig in die eine oder in die andere Richtung öffenbar bzw. schließbar ist.

Eine vorteilhafte Weiterentwicklung sieht vor, dass der Kolben eine senkrecht zur Spannrichtung verlaufende Kolbenscheibe aufweist, welche den ersten Druckraum und den zweiten Druckraum begrenzt. Es ist zudem vorteilhaft, wenn der Kolben eine parallel zur Spannrichtung verlaufende Kolbenstange aufweist, welche einen dritten Kolbenraum begrenzt. Folglich kann das Spannelement und/oder der Kolben durch die Beaufschlagung des ersten Druckraums, des zweiten Druckraums und/oder des dritten Druckraums verlagert werden.

Es ist vorteilhaft, wenn der erste, der zweite und der dritte Druckraum derart ausgebildet sind, dass beim Verfahren zwischen den Endlagen, also der Anschlagsstellung und der Öffnungsstellung, kein Volumenüberschuss entsteht. Vorzugsweise ist das Volumen des ersten Druckraums und/oder des zweiten Druckraums größer als das Volumen des dritten Druckraums ausgebildet. Bevorzugt entspricht das Volumen des ersten Druckraums im Wesentlichen der Summe der Volumina des zweiten Druckraums und des dritten Druckraums oder das Volumen des zweiten Druckraums im Wesentlichen der Summe der Volumina des ersten Druckraums und des dritten Druckraums. Sollte ein Volumenausgleich nicht möglich sein, so ist ein zusätzlicher Druckspeicher vorzusehen.

Es ist ferner vorteilhaft, wenn beim Verlagern des Spannelements in die Anschlagsstellung Fluid aus dem dritten Druckraum in den ersten Druckraum oder den zweiten Druckraum strömt. So muss kein zusätzliches Fluid zum Befüllen des ersten Druckraums oder des zweiten Druckraums bereitgestellt werden.

Vorteilhafterweise ist der dritte Druckraum zum Verlagern des Spannelements in die Öffnungsstellung mit einem Fluid befüllbar. Demnach wirkt eine Befüllung des dritten Druckraums entlang der Spannrichtung entgegen der Antriebseinheit.

Eine vorteilhafte Weiterentwicklung sieht vor, dass der senkrecht zur Spannrichtung verlaufende Scheibendurchmesser der Kolbenscheibe größer als der senkrecht zur Spannrichtung verlaufende Stangendurchmesser der Kolbenstange ausgebildet ist. Das Verhältnis zwischen Scheibendurchmesser und Stangendurchmesser ist insbesondere größer als 2:1 und/oder kleiner als 10:1, vorzugsweise in einem Bereich zwischen 6:1 und 4:1. Folglich kann an der Kolbenscheibe und der Kolbenstange eine unterschiedliche Wirkfläche für den Eilhub und/oder den Krafthub bereitgestellt werden, wobei insbesondere die Wirkfläche zum Verfahren in die Öffnungsstellung kleiner als die Wirkfläche zum Realisieren des Krafthubs ausgebildet ist. Somit ist bei dem gleichen Volumenstrom die Geschwindigkeit zum Verlagern des Spannelements in die Öffnungsstellung höher.

Vorteilhafterweise ist im Gehäuse ein erstes Trägerteil angeordnet, wobei im ersten Trägerteil der erste Druckraum, der zweite Druckraum, die Kolbenscheibe und/oder die Kolbenstange angeordnet sind. Zudem ist vorteilhaft, wenn das erste Trägerteil und/oder der Kolben schwimmend gelagert und parallel zur Spannrichtung verlagerbar sind.

Vorteilhafterweise ist im Gehäuse ein zweites Trägerteil angeordnet, wobei der Kolben einen parallel zur Spannrichtung verlaufenden Kolbenstutzen aufweist, welcher aus dem ersten Trägerteil herausragt und in das zweite Trägerteil hineinragt. Der Kolbenstutzen kann das erste Trägerteil und das zweite Trägerteil in Richtung der Anschlagsstellung und/oder der Öffnungsstellung zueinander verbinden. Das zweite Trägerteil ist vorzugsweise schwimmend gelagert und parallel zur Spannrichtung verlagerbar. Das zweite Trägerteil kann durch den Kolbenstutzen beaufschlagbar sein, wobei insbesondere durch Beaufschlagen des dritten Druckraums der Kolbenstutzen gegen das Trägerteil drängt.

Ferner ist es vorteilhaft, wenn das erste Trägerteil mit einem Spannelement bewegungsgekoppelt ist und/oder das zweite Trägerteil mit einem Spannelement bewegungsgekoppelt ist. Eine Verlagerung des ersten Trägerteils und/oder des zweiten Trägerteils entlang der Spannrichtung geht mit einer Verlagerung des jeweils zugeordneten Spannelements einher. Der dritte Druckraum ist vorzugsweise derart beaufschlagbar, dass das erste Trägerteil unmittelbar und/oder das zweite Trägerteil mittelbar durch den Kolbenstutzen verlagert werden.

Eine vorteilhafte Weiterentwicklung sieht vor, dass die Antriebseinheit zwischen dem Gehäuse und dem ersten Trägerteil und/oder zwischen dem Gehäuse und dem zweiten Trägerteil angeordnet ist. Alternativ kann die Antriebseinheit auch zwischen dem ersten Trägerteil und dem zweiten Trägerteil angeordnet sein. Die Antriebseinheit ist vorzugsweise als Federelement oder als pneumatisch oder hydraulisch wirkendes Antriebseinheit ausgebildet. Die Antriebseinheit ist vorzugsweise derart ausgebildet, dass diese das erste Trägerteil und/oder das zweite Trägerteil in die Anschlagsstellung, insbesondere entlang der Spannrichtung aufeinander zu beaufschlagen. Solange der dritte Druckraum mit einem Arbeitsdruck beaufschlagt wird, verbleibt das erste Trägerteil und/oder das zweite Trägerteil in der Öffnungsstellung. Der Arbeitsdruck und/oder die Wirkfläche im dritten Druckraum sind derart ausgebildet, dass die daraus resultierende Kraft größer als die Antriebskraft der Antriebseinheit ist. Sobald der Arbeitsdruck im dritten Druckraum unter einen Grenzwert sinkt, ist die resultierende Kraft geringer als die Antriebskraft der Antriebseinheit, sodass das erste Trägerteil und/oder das zweite Trägerteil in die Anschlagsstellung, insbesondere aufeinander zu verlagert werden. Demnach beaufschlagt die Antriebseinheit das erste Trägerteil und/oder das zweite Trägerteil unmittelbar in die Anschlagsstellung. Der Arbeitsdruck im dritten Druckraum wird erhöht, um das erste Trägerteil und/oder das zweite Trägerteil in die Öffnungsstellung zu verlagern, wobei der dritte Druckraum, insbesondere durch die schwimmende Lagerung, den Kolben und das erste Trägerteil verlagert und wobei der Kolbenstutzen das zweite Trägerteil verlagert.

Ferner wird die der Erfindung zugrundeliegende Aufgabe durch ein Verfahren zum Betreiben eines Spannsystems mit den Merkmalen des Anspruchs 13 gelöst. Das Spannsystem weist dabei wenigstens ein zwischen einer Öffnungsstellung und einer Anschlagsstellung verlagerbares Spannelement auf, wobei das wenigstens eine Spannelement in der Anschlagsstellung mit einer Spannkraft beaufschlagbar ist. Das wenigstens eine Spannelement wird zum Verfahren des wenigstens einen Spannelements aus der Öffnungsstellung in die Anschlagsstellung mit einer von einer Antriebseinheit, insbesondere von wenigstens einem Federelement oder einem als pneumatisch oder hydraulisch wirkendes Antriebseinheit, bereitgestellten Hubkraft beaufschlagt. Beim Verfahren des Spannelements aus der Öffnungsstellung in die Anschlagsstellung strömt Fluid über eine Verbindungsleitung aus einem ersten Druckraum in einen zweiten Druckraum oder aus dem zweiten Druckraum in den ersten Druckraum. Bei oder nach Erreichen der Anschlagsstellung wird der Arbeitsdruck im ersten Druckraum oder im zweiten Druckraum mittels einer Pumpeneinheit, insbesondere einer Mikropumpe, vorzugsweise Piezoelement-Pumpe oder Membranpumpe, zur Bereitstellung der Spannkraft erhöht.

Vorzugsweise umfasst das Verfahren folgende Schritte:
a. Verlagern des Spannelements in einem Eilhub in die Anschlagsstellung mittels des Antriebselements, insbesondere mittels der im Antriebselement gespeicherten Energie;
b. Beaufschlagen des ersten Druckraums oder des zweiten Druckraums in einem Krafthub zum Erhöhen der Spannkraft des Spannelements in der Anschlagsstellung mittels der Pumpeneinheit; und
c. Aktives Öffnen des Spannsystems, insbesondere des wenigstens einen Spannelements, aus der Anschlagsstellung in die Öffnungsstellung durch Beaufschlagen des dritten Druckraums mittels der Pumpeneinheit oder mittels einer weiteren Pumpeneinheit.

Folglich kann die Pumpeneinheit nur für die Bereitstellung der Spannkraft im Krafthub dimensioniert sein. Das Verlagern des Spannelements in die Anschlagsstellung kann vorzugsweise ausschließlich durch das Antriebselement erfolgen.

Zum Verlagern des wenigstens einen Spannelements in die Öffnungsstellung wird vorzugsweise der Arbeitsdruck in einem dritten Druckraum erhöht. Dabei ist das Spannelement unabhängig vom ersten Druckraum und/oder zweiten Druckraum verlagerbar. Der Arbeitsdruck im dritten Druckraum ist vorzugsweise mittels der Pumpeneinheit oder einer weiteren Pumpeneinheit erhöhbar.

Vorteilhafterweise strömt während des Eilhubs Fluid vom ersten Druckraum und vom dritten Druckraum in den zweiten Druckraum oder vom zweiten Druckraum und dem dritten Druckraum in den ersten Druckraum. Demnach muss kein zusätzliches Fluid bereitgestellt werden. Der erste Druckraum und der zweite Druckraum und vorzugsweise der dritte Druckraum können im Wesentlichen als geschlossenes System ausgebildet sein.

Die der Erfindung zugrundeliegende Aufgabe wird ebenfalls durch ein Verfahren zum Betreiben eines Spannsystems nach den Ansprüchen 1 bis 12 gelöst.

Weitere Einzelheiten und vorteilhafte Ausgestaltungen der Erfindung sind der nachfolgenden Beschreibung zu entnehmen, anhand derer ein Ausführungsbeispiel näher beschrieben und erläutert ist. Es zeigen:
- Fig. 1a: eine Ansicht eines als Nullpunktspannmodul ausgebildeten Spannsystems;
- Fig. 1b: eine Ansicht eines als Kraftspannblock ausgebildeten Spannsystems;
- Fig. 1c: eine Ansicht eines als Spannfutter ausgebildeten Spannsystems;
- Fig. 1d: eine Ansicht eines als Greifer ausgebildeten Spannsystems;
- Fig. 2: eine Schnittansicht eines Spannsystems gemäß Fig. 1a bis 1d; und
- Fig. 3: eine Detailansicht des Schnitts der Fig. 2.

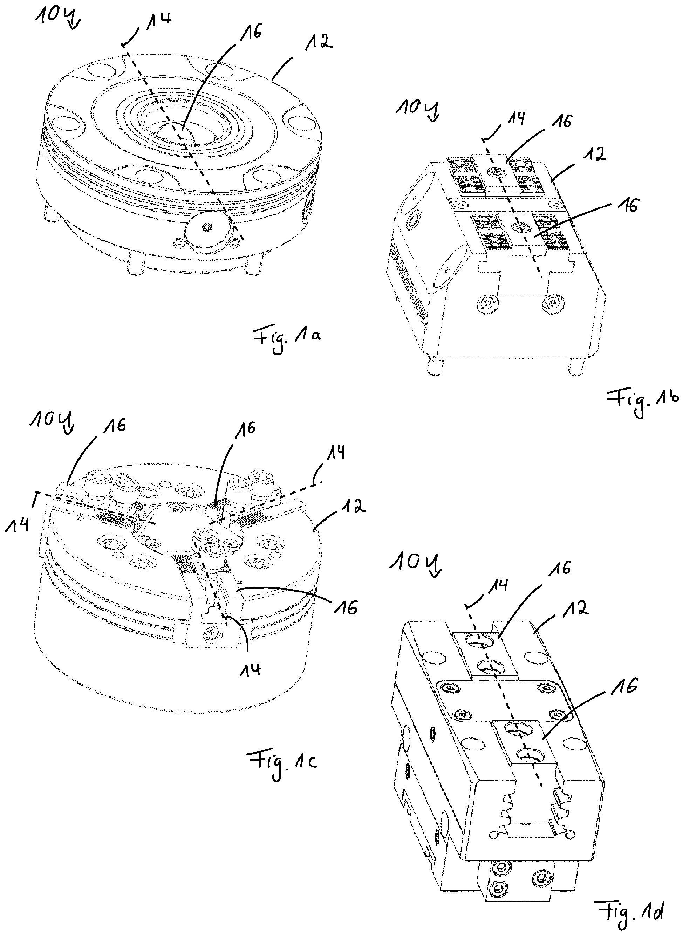

Die Fig. 1a bis 1d zeigen eine Auswahl von möglichen Ausführungsformen des erfindungsgemäßen Spannsystems 10. Die Spannsysteme 10 weisen jeweils ein Gehäuse 12 und wenigstens ein im Gehäuse 12 entlang einer Spannrichtung 14 zwischen einer Öffnungsstellung und einer Anschlagsstellung verfahrbares Spannelement 16. In der Anschlagsstellung ist das Spannelement 16 gegen das zu spannende Bauteil beaufschlagt. In der Öffnungsstellung kann das Bauteil in das Spannsystem 10 eingeführt oder aus dem Spannsystem 10 entnommen werden. Das Nullpunktspannmodul gemäß Fig. 1a weist eine Spannaufnahme zur Aufnahme eines Spannbolzens oder eines Trägerteils auf, wobei beim Spannen das zu spannende Bauteil gegen das Gehäuse 12 beaufschlagt wird.

Die Spannsysteme 10 der Fig. 1b bis 1d können Bauteile sowohl zentrisch, also zwischen den Spannelementen 16, als auch außen, also außerhalb der Spannelemente 16, spannen. Es ist ersichtlich, dass die Spannelemente entlang einer Spannrichtung 14, wie in den Figuren 1a, 1b und 1d gezeigt, verlagerbar sind oder dass die Spannelemente 16 entlang jeweils einer Spannrichtung 14 verlagerbar, wobei diese Spannrichtungen 14 radial um eine Spannaufnahme ausgebildet sind.

Die Spannsysteme 10 weisen einen Eilhub und einen Krafthub auf. Die Spannelemente 16 sind entlang der Spannrichtung 14 aus der Öffnungsstellung in die Anschlagsstellung und aus der Anschlagsstellung in die Öffnungsstellung im Eilhub verfahrbar. Ausschließlich unmittelbar vor Erreichen oder in der Anschlagsstellung sind die Spannelemente 16 im Krafthub mit einer Spannkraft gegen das zu spannende Bauteil beaufschlagbar.

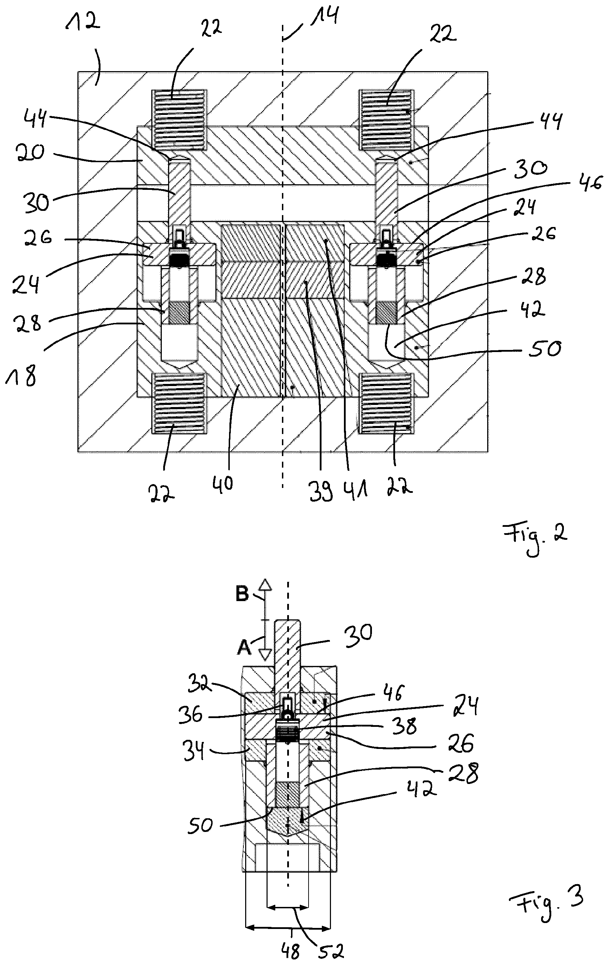

In den Fig. 2 und 3 ist ersichtlich, wie die Realisierung der Verlagerung der Spannelemente 16 im Eilhub und das Beaufschlagen der Spannelemente 16 im Krafthub ausgeführt sein können. Im Gehäuse 12 sind ein erstes Trägerteil 18 und ein zweites Trägerteil 20 entlang der Spannrichtung 14 beweglich gelagert. Das erste Trägerteil 18 ist mit einem ersten Spannelement 16 und das zweite Trägerteil 20 ist mit einem zweiten Spannelement 16 bewegungsgekoppelt, wobei beim Verlagern des ersten Trägerteils 18 aus der Öffnungsstellung in die Anschlagsstellung das erste Spannelement 16 ebenfalls aus der Öffnungsstellung in die Anschlagsstellung verlagert wird. In Fig. 2 sind das erste Trägerteil 18 und das zweite Trägerteil 20 in der Öffnungsstellung gezeigt, wenn das Spannsystem 10 zentrisch spannend ausgebildet ist. In Fig. 3 ist das erste Trägerteil 18 und das zweite Trägerteil 20 zwischen der Anschlagsstellung und der Öffnungsstellung gezeigt, wobei zur Verlagerung in die Anschlagsstellung das erste Trägerteil 18 in Richtung A und das zweite Trägerteil 20 in Richtung B bewegt wird und wobei zur Verlagerung in die Öffnungsstellung das erste Trägerteil 18 in Richtung B und das zweite Trägerteil 20 in Richtung A bewegt wird.

Zur Verlagerung des ersten Trägerteils 18 und des zweiten Trägerteils 20 aus der Öffnungsstellung in die Anschlagsstellung ist eine Antriebseinheit 22 vorgesehen, welche insbesondere mehrere Antriebsmittel umfasst, und/oder welche vorzugsweise als wenigstens ein Federelement ausgebildet ist. Die Antriebseinheit 22 beaufschlagt das erste Trägerteil 18 und das zweite Trägerteil 20 aufeinander zu. Die Antriebseinheit 22 ist vorzugsweise zwischen dem Gehäuse 12 und dem ersten Trägerteil 18 sowie zwischen dem Gehäuse 12 und dem zweiten Trägerteil 20 angeordnet. Alternativ kann die Antriebseinheit 22 auch zwischen dem ersten Trägerteil 18 und dem zweiten Trägerteil 20 angeordnet sein.

In Fig. 2 sind im ersten Trägerteil 18 zwei Kolben 24 mit jeweils einer Kolbenscheibe 26, einer Kolbenstange 28 und einem Kolbenstutzen 30 angeordnet. Die Kolben 24 sind entlang der Spannrichtung 14 im ersten Trägerteil 18 beweglich gelagert. In Fig. 3 ist einer der beiden Kolben 24 der Fig. 2 gezeigt, wobei der Kolben 24 derart angeordnet ist, dass das erste Trägerteile 18 und das zweite Trägerteil 20 sich zwischen der Öffnungsstellung und der Anschlagsstellung befindet. Die Kolbenscheibe 26 begrenzt gemäß Fig. 3 einen mit Fluid befüllbaren ersten Druckraum 32 und einen mit Fluid befüllbaren zweiten Druckraum 34. Der erste Druckraum 32 und der zweite Druckraum 34 sind mittels einer Verbindungsleitung 36 miteinander verbunden. In der Verbindungsleitung 36 ist ein Rückschlagventil 38 angeordnet, welches in Richtung des ersten Druckraums 32 geöffnet und in Richtung des zweiten Druckraums 34 geschlossen ist. Die Verbindungsleitung 36 und das Rückschlagventil 38 sind am oder im Kolben 24 bzw. an oder in der Kolbenscheibe 26 angeordnet. Die Verbindungsleitung 36 und/oder das Rückschlagventil 38 sind vorzugsweise derart angeordnet, dass eine möglichst kurze Verbindung zwischen dem ersten Druckraum 32 und dem zweiten Druckraum 34 vorliegt, womit insbesondere eine geringe Reibung des Fluides einhergeht. Die Verbindungsleitung 36 und/oder das Rückschlagventil 38 können daher alternativ auch im ersten Trägerteil 18 angeordnet sein.

Beim Verlagern des ersten Trägerteil 18 und des zweiten Trägerteils 20 aus der Öffnungsstellung in die Anschlagsstellung strömt Fluid aus dem zweiten Druckraum 34 über die Verbindungsleitung 36 in den ersten Druckraum 32. Folglich muss beim Verlagern der Trägerteile 18, 20 kein signifikanter Widerstand hinsichtlich der Druckräume 32, 34 überwunden werden.

Die Trägerteile 18, 20 werden im Eilhub mit einer hohen Geschwindigkeit und einer geringen Kraft aus der Öffnungsstellung in die Anschlagsstellung verlagert. Zum Spannen des zu spannenden Bauteils wird eine Spannkraft benötigt, welche vor oder nach Erreichen der Anschlagsstellung ausgebildet wird. Dazu ist eine Pumpeneinheit 40 vorgesehen, welche vorzugsweise im ersten Trägerteil 18 und insbesondere zwischen den beiden Kolben 24 angeordnet ist. Es kann zudem eine Ventileinheit 39 und ein Fluidreservoir 41 vorgesehen sein, welche insbesondere im ersten Trägerteil 18 angeordnet sind. Die Ventileinheit 39 kann vorzugsweise zur steuerbaren fluidischen Verbindung der Druckräume 32, 34 und weiterer Druckräume ausgebildet sein. Das Fluidreservoir 41 stellt Fluid zum Befüllen der Druckräume 32, 34 und weiterer Druckräume bereit und dient dem Volumenausgleich aufgrund von Temperaturschwankungen und unterschiedlichen Volumen der Druckräume 32, 34 und weiterer Druckräume.

Beim Erreichen der Anschlagsstellung befindet sich Fluid im ersten Druckraum 32, wobei aufgrund des Rückschlagventils 38 kein Fluid zurück in den zweiten Druckraum 34 strömen kann. Die Pumpeneinheit 40 erhöht den Arbeitsdruck im ersten Druckraum 32, sodass im Krafthub die Spannkraft ausgebildet wird, welche das Spannelement 16 gegen das zu spannende Bauteil beaufschlagt. Zum Aufbau des Arbeitsdrucks und der damit einhergehenden Spannkraft muss folglich die Pumpeneinheit 40 nicht zunächst den gesamten ersten Druckraum 32 mit Fluid füllen, sondern muss nur den Differenzdruck p_{Kratfhub} - p_{Eilhub} und das Differenzvolumen V_{Krafthub} - V_{Eilhub} bereitstellen. Somit ist bei dem gleichen Volumenstrom die Geschwindigkeit zum Verlagern des Spannelements 16 in die Anschlagsstellung höher.

Zur Verlagerung der Trägerteile 18, 20 aus der Anschlagsstellung in die Öffnungsstellung ist ein dritter Druckraum 42 vorgesehen, welcher ebenfalls mit einem Fluid befüllbar ist. Der dritte Druckraum 42 ist im ersten Trägerteil 18 angeordnet und wird durch die Kolbenstange 28 begrenzt. Zum Verlagern aus der Anschlagsstellung in die Öffnungsstellung wird der Arbeitsdruck im dritten Druckraum 42 derart erhöht, dass die daraus resultierende Kraft größer als die Kraft der Antriebseinheit 22 ist. Dies führt dazu, dass das erste Trägerteil 18 unmittelbar in die Öffnungsstellung verlagert wird. Zudem ist der Kolbenstutzen 30 derart ausgebildet, dass dieser aus dem ersten Trägerteil 18 hinausragt und in eine Stutzenaufnahme 44 des zweiten Trägerteils 20 hineinragt. Durch Erhöhen des Arbeitsdrucks im dritten Druckraum 42 wird der Kolben 24 und damit der Kolbenstutzen 30 gegen das zweite Trägerteil 20 beaufschlagt, sodass das zweite Trägerteil 20 in die Öffnungsstellung verlagert wird. Solange der Arbeitsdruck im dritten Druckraum 42 aufrechterhalten wird, verbleiben die Spannelemente 16 in der Öffnungsstellung. Es ist ferner denkbar, dass Fluid aus dem dritten Druckraum 42 beim Verlagern aus der Öffnungsstellung in die Anschlagsstellung ebenfalls in den ersten Druckraum 32 strömt.

Aus dem Eilhub und dem Krafthub ergeben sich unterschiedliche Anforderungen an die Bereitstellung der Kraft. Die Kolbenscheibe 26 weist eine Scheibenwirkfläche 46 und einen Scheibendurchmesser 48 auf. Die Kolbenstange 28 weist eine Stangenwirkfläche 50 und einen Stangendurchmesser 52 auf. Aufgrund der bereitzustellenden Spannkraft ist der Scheibendurchmesser 48 größer als der Stangendurchmesser 52 ausgebildet. Die Pumpeneinheit 40 kann aufgrund der größeren Scheibenwirkfläche 46 die Spannelemente 16 mit einer größeren Kraft beaufschlagen. Eine derartige Kraftbeaufschlagung ist für die Verlagerung von der Anschlagsstellung in die Öffnungsstellung nicht erforderlich. Zudem kann die Verlagerung aus der Anschlagsstellung in die Öffnungsstellung mit konstanter Geschwindigkeit erfolgen, wobei durch die kleinere Stangenwirkfläche 50 die Verlagerungszeit reduziert ist.

Ein Arbeitszyklus des Spannelements 10 kann folgende Schritte aufweisen: Zunächst befindet sich das wenigstens eine Spannelement 16 in der Öffnungsstellung, indem der Arbeitsdruck im dritten Druckraum 42 anliegt. Zum Verlagern des Spannelements 16 aus der Öffnungsstellung in die Anschlagstellung wird der Arbeitsdruck im dritten Druckraum 42 verringert, bis die daraus resultierende Kraft kleiner als die Kraft der Antriebseinheit 22 ist. Dabei beaufschlagen die Antriebseinheit 22 die Trägerteile 18, 20 aufeinander zu und verlagern somit die Spannelemente 16 in die Anschlagsstellung. Während des Verlagerns strömt aus dem zweiten Druckraum 34 und insbesondere dem dritten Druckraum 42 Fluid in den ersten Druckraum 32. Bei Erreichen der Anschlagsstellung ist dann der erste Druckraum 32 mit Fluid befüllt. Aufgrund des Rückschlagventils 38 kann kein Fluid zurück in den zweiten Druckraum 34 strömen. Dann kommt die Pumpeneinheit 40 zum Einsatz, welche den Arbeitsdruck derart erhöht, dass die Spannkraft im Krafthub bereitgestellt wird. Die Pumpeneinheit 40 stellt nur den Differenzdruck p_{Krarthub} - p_{Eilhub} und das Differenzvolumen V_{Krafthub} - V_{Eilhub} bereit, sodass beim gleichen Volumenstrom die Geschwindigkeit zum Verlagern des Spannelements 16 in die Anschlagsstellung höher ist. Nach dem Spannen des Bauteils können die Spannelemente 16 aus der Anschlagsstellung in die Öffnungsstellung verlagert werden. Dazu wird der dritte Druckraum 42 mit einem Arbeitsdruck beaufschlagt, dessen resultierende Kraft größer als die Kraft der Antriebseinheit 22 ist. Ferner strömt Fluid aus dem ersten Druckraum 32 mittels der Ventileinheit 39 in das Fluidreservoir 41 und/oder in den zweiten Druckraum 34. Spannelements 16 in die Anschlagsstellung höher ist. Nach dem Spannen des Bauteils können die Spannelemente 16 aus der Anschlagsstellung in die Öffnungsstellung verlagert werden. Dazu wird der dritte Druckraum 42 mit einem Arbeitsdruck beaufschlagt, dessen resultierende Kraft größer als die Kraft der Antriebseinheit 22 ist. Ferner strömt Fluid aus dem ersten Druckraum 32 mittels der Ventileinheit 39 in das Fluidreservoir 41 und/oder in den zweiten Druckraum 34.

## Patentansprüche

1. Spannsystem (10) mit wenigstens einem in einem Gehäuse (12) entlang einer Spannrichtung (14) zwischen einer Öffnungsstellung und einer Anschlagsstellung verfahrbaren Spannelement (16), wobei das Spannelement (16) in der Anschlagsstellung mit einer Spannkraft beaufschlagbar ist,
mit einer Antriebseinheit (22) zur Bereitstellung einer Hubkraft zum Verfahren des Spannelements (16) aus der Öffnungsstellung in die Anschlagsstellung, wobei wenigstens ein Kolben (24) vorgesehen ist, welcher einen mit Fluid befüllbaren ersten Druckraum (32) und einen mit dem ersten Druckraum (32) über eine am oder durch den Kolben (24) verlaufende Verbindungsleitung (36) unmittelbar verbundenen, ebenfalls mit dem Fluid befüllbaren zweiten Druckraum (34) begrenzt,
wobei in der Verbindungsleitung (36) ein Ventil (38) angeordnet ist,
wobei beim Verfahren des Spannelements (16) mit der von der Antriebseinheit (22) bereitgestellten Hubkraft Fluid über die Verbindungsleitung (36) aus dem ersten Druckraum (32) in den zweiten Druckraum (34) oder aus dem zweiten Druckraum (34) in den ersten Druckraum (32) strömt, dadurch gekennzeichent, dass zusätzlich eine Pumpeneinheit (40) vorgesehen und dazu eingerichtet ist, bei oder nach Erreichen der Anschlagsstellung den Arbeitsdruck im ersten Druckraum (32) oder im zweiten Druckraum (34) zur Bereitstellung der Spannkraft zu erhöhen.

2. Spannsystem (10) nach Anspruch 1, wobei die Pumpeneinheit (40) als Mikropumpe ausgebildet und innerhalb des Gehäuses (12) vorgesehen ist.

3. Spannsystem (10) nach Anspruch 1 oder 2, wobei das Ventil (38) als Schaltventil oder Rückschlagventil ausgebildet ist, welches beim Verlagern des Spannelements (16) in die Anschlagsstellung in Richtung des ersten Druckraums (32) oder des zweiten Druckraums (34) öffnet und in Richtung des zweiten Druckraums (34) oder des ersten Druckraums (32) schließt.

4. Spannsystem (10) nach einem vorherigen Anspruch, wobei der Kolben (24) eine senkrecht zur Spannrichtung (14) verlaufende Kolbenscheibe (26) und eine parallel zur Spannrichtung (14) verlaufende Kolbenstange (28) aufweist, wobei die Kolbenscheibe (26) den ersten Druckraum (32) und den zweiten Druckraum (34) begrenzt, und wobei die Kolbenstange (28) einen dritten Druckraum (42) begrenzt.

5. Spannsystem (10) nach Anspruch 4, wobei das Volumen des ersten Druckraums der Summe der Volumina des zweiten Druckraums und des dritten Druckraums entspricht, oder wobei das Volumen des zweiten Druckraums der Summe der Volumina des ersten Druckraums und des dritten Druckraums entspricht.

6. Spannsystem (10) nach Anspruch 4 oder 5, wobei beim Verlagern des Spannelements (16) in die Anschlagsstellung Fluid aus dem dritten Druckraum (42) in den ersten Druckraum (32) oder den zweiten Druckraum (34) strömt.

7. Spannsystem (10) nach einem der Ansprüche 4 bis 6, wobei der dritte Druckraum (42) zum Verlagern des Spannelements (16) in die Öffnungsstellung mit einem Fluid befüllbar ist.

8. Spannsystem (10) nach einem der Ansprüche 4 bis 7, wobei der senkrecht zur Spannrichtung (14) verlaufende Scheibendurchmesser (48) der Kolbenscheibe (26) größer als der senkrecht zur Spannrichtung (14) verlaufende Stangendurchmesser (52) der Kolbenstange (28) ausgebildet ist.

9. Spannsystem (10) nach einem vorherigen Anspruch, wobei im Gehäuse (12) ein erstes Trägerteil (18) angeordnet ist, wobei im ersten Trägerteil (18) der erste Druckraum (32), der zweite Druckraum (34), die Kolbenscheibe (26) und/oder die Kolbenstange (28) angeordnet sind, und/oder wobei das erste Trägerteil (18) und/oder der Kolben (24) parallel zur Spannrichtung (14) verlagerbar sind.

10. Spannsystem (10) nach Anspruch 9, wobei im Gehäuse (12) ein zweites Trägerteil (20) angeordnet ist, wobei der Kolben (24) einen parallel zur Spannrichtung (14) verlaufenden Kolbenstutzen (30) aufweist, welcher aus dem ersten Trägerteil (18) herausragt und in das zweite Trägerteil (20) eingreift, und/oder wobei das zweite Trägerteil (20) parallel zur Spannrichtung (14) verlagerbar ist.

11. Spannsystem (10) nach Anspruch 10, wobei das erste Trägerteil (18) mit einem Spannelement (16) bewegungsgekoppelt ist und/oder das zweite Trägerteil (20) mit einem Spannelement (16) bewegungsgekoppelt ist.

12. Spannsystem (10) nach einem vorherigen Anspruch, wobei die Antriebseinheit (22) wenigstens ein Federelement umfasst, wobei die Antriebseinheit (22) zwischen dem Gehäuse (12) und dem ersten Trägerteil (18) und/oder zwischen dem Gehäuse (12) und dem zweiten Trägerteil (20) und/oder zwischen dem ersten Trägerteil (18) und dem zweiten Trägerteil (20) angeordnet ist.

13. Verfahren zum Betreiben eines Spannsystems (10) mit wenigstens einem zwischen einer Öffnungsstellung und einer Anschlagsstellung verfahrbaren Spannelement (16), wobei das Spannelement (16) in der Anschlagsstellung mit einer Spannkraft beaufschlagbar ist,
wobei das Spannelement (16) zum Verfahren des Spannelements (16) aus der Öffnungsstellung in die Anschlagsstellung mit einer von einer Antriebseinheit (22) bereitgestellten Hubkraft beaufschlagt wird,
wobei beim Verfahren des Spannelements (16) mit der Hubkraft Fluid aus einem durch einen Kolben (24) begrenzten ersten Druckraum (32) in einen durch den Kolben (24) begrenzten zweiten Druckraum (34) oder aus dem durch den Kolben (24) begrenzten zweiten Druckraum (34) in den durch den Kolben (24) begrenzten ersten Druckraum (32) unmittelbar über eine am oder durch den Kolben (24) verlaufende Verbindungsleitung (36) und über ein in der Verbindungsleitung (36) angeordnetes Ventil (38) strömt, **dadurch gekennzeichnet,**
**dass** bei oder nach Erreichen der Anschlagsstellung der Arbeitsdruck im ersten Druckraum (32) oder im zweiten Druckraum (34) mittels einer zusätzlichen Pumpeneinheit (40) zur Bereitstellung der Spannkraft erhöht wird.

14. Verfahren nach Anspruch 13, weiter **gekennzeichnet durch** folgende Schritte:
a. Verlagern des Spannelements (16) in einem Eilhub in die Anschlagsstellung mittels der Antriebseinheit (22) ;
b. Beaufschlagen des ersten Druckraums (32) oder des zweiten Druckraums (34) in einem Krafthub zum Erhöhen der Spannkraft des Spannelements (16) in der Anschlagsstellung mittels der Pumpeneinheit (40); und
c. Aktives Öffnen des Spannsystems (10), insbesondere des wenigstens einen Spannelements (16), aus der Anschlagsstellung in die Öffnungsstellung durch Beaufschlagen eines dritten Druckraums (42) mittels der Pumpeneinheit (40) oder mittels einer weiteren Pumpeneinheit (40).

15. Verfahren nach einem der Ansprüche 13 oder 14, wobei der Arbeitsdruck in einem dritten Druckraum (42) zum Verlagern des Spannelements (16) in die Öffnungsstellung erhöht wird.

16. Verfahren nach einem der Ansprüche 14 oder 15, wobei während des Eilhubs Fluid vom ersten Druckraum (32) und vom dritten Druckraum (42) in den zweiten Druckraum (34) oder vom zweiten Druckraum (34) und dem dritten Druckraum (42) in den ersten Druckraum (32) strömt.

## Claims

1. Clamping system (10) comprising at least one clamping element (16) which can be moved in a housing (12) in a clamping direction (14) between an open position and a stop position, wherein the clamping element (16) can be subjected to a clamping force in the stop position, and comprising a drive unit (22) for providing a lifting force in order to move the clamping element (16) from the open position into the stop position, wherein
at least one piston (24) is provided which delimits a first pressure chamber (32) which can be filled with fluid and a second pressure chamber (34) which is directly connected to the first pressure chamber (32) via a connecting line (36) extending on or through the piston (24) and which can also be filled with the fluid,
wherein a valve (38) is arranged in the connecting line (36),
wherein, when the clamping element (16) is moved by means of the lifting force provided by the drive unit (22), fluid flows via the connecting line (36) from the first pressure chamber (32) into the second pressure chamber (34) or from the second pressure chamber (34) into the first pressure chamber (32), **characterized in that**
a pump unit (40) is additionally provided and is designed, when or after the stop position is reached, to increase the operating pressure in the first pressure chamber (32) or in the second pressure chamber (34) in order to provide the clamping force.

2. Clamping system (10) according to claim 1, wherein the pump unit (40) is designed as a micropump and is provided within the housing (12).

3. Clamping system (10) according to claim 1 or 2, wherein the valve (38) is designed as a switching valve or check valve which, when the clamping element (16) is moved into the stop position, opens in the direction of the first pressure chamber (32) or the second pressure chamber (34) and closes in the direction of the second pressure chamber (34) or the first pressure chamber (32).

4. Clamping system (10) according to any preceding claim, wherein the piston (24) has a piston disk (26) extending perpendicularly to the clamping direction (14) and a piston rod (28) extending in parallel with the clamping direction (14), wherein the piston disk (26) delimits the first pressure chamber (32) and the second pressure chamber (34), and wherein the piston rod (28) delimits a third pressure chamber (42).

5. Clamping system (10) according to claim 4, wherein the volume of the first pressure chamber corresponds to the sum of the volumes of the second pressure chamber and the third pressure chamber, or wherein the volume of the second pressure chamber corresponds to the sum of the volumes of the first pressure chamber and the third pressure chamber.

6. Clamping system (10) according to claim 4 or 5, wherein, when the clamping element (16) is moved into the stop position, fluid flows from the third pressure chamber (42) into the first pressure chamber (32) or the second pressure chamber (34).

7. Clamping system (10) according to any of claims 4 to 6, wherein the third pressure chamber (42) can be filled with a fluid in order to move the clamping element (16) into the open position.

8. Clamping system (10) according to any of claims 4 to 7, wherein the disk diameter (48) of the piston disk (26) extending perpendicularly to the clamping direction (14) is larger than the rod diameter (52) of the piston rod (28) extending perpendicularly to the clamping direction (14).

9. Clamping system (10) according to any preceding claim, wherein a first carrier part (18) is arranged in the housing (12), wherein the first pressure chamber (32), the second pressure chamber (34), the piston disk (26) and/or the piston rod (28) are arranged in the first carrier part (18), and/or wherein the first carrier part (18) and/or the piston (24) are movable in parallel with the clamping direction (14).

10. Clamping system (10) according to claim 9, wherein a second carrier part (20) is arranged in the housing (12), wherein the piston (24) has a piston nozzle (30) which extends in parallel with the clamping direction (14), and which protrudes from the first carrier part (18) and engages in the second carrier part (20), and/or wherein the second carrier part (20) is movable in parallel with the clamping direction (14).

11. Clamping system (10) according to claim 10, wherein the first carrier part (18) is motion-coupled to a clamping element (16) and/or the second carrier part (20) is motion-coupled to a clamping element (16).

12. Clamping system (10) according to any preceding claim, wherein the drive unit (22) comprises at least one spring element, wherein the drive unit (22) is arranged between the housing (12) and the first carrier part (18) and/or between the housing (12) and the second carrier part (20) and/or between the first carrier part (18) and the second carrier part (20).

13. Method for operating a clamping system (10) comprising at least one clamping element (16) which can be moved between an open position and a stop position, wherein the clamping element (16) can be subjected to a clamping force in the stop position,
wherein the clamping element (16) is subjected to a lifting force provided by a drive unit (22) in order to move the clamping element (16) from the open position into the stop position,
wherein, when the clamping element (16) is moved by means of the lifting force, fluid flows from a first pressure chamber (32) delimited by a piston (24) into a second pressure chamber (34) delimited by the piston (24) or from the second pressure chamber (34) delimited by the piston (24) into the first pressure chamber (32) delimited by the piston (24) directly via a connecting line (36) extending on or through the piston (24) and via a valve (38) arranged in the connecting line (36), **characterized in**
**that,** when or after the stop position is reached, the operating pressure in the first pressure chamber (32) or in the second pressure chamber (34) is increased by means of an additional pump unit (40) in order to provide the clamping force.

14. Method according to claim 13, further **characterized by** the following steps:
a. moving the clamping element (16) into the stop position in a rapid stroke by means of the drive unit (22);
b. acting on the first pressure chamber (32) or the second pressure chamber (34) in a power stroke in order to increase the clamping force of the clamping element (16) in the stop position by means of the pump unit (40); and
c. actively opening the clamping system (10), in particular the at least one clamping element (16), from the stop position into the open position by acting on a third pressure chamber (42) by means of the pump unit (40) or by means of a further pump unit (40).

15. Method according to any of claims 13 or 14, wherein the operating pressure in a third pressure chamber (42) is increased in order to move the clamping element (16) into the open position.

16. Method according to any of claims 14 or 15, wherein, during the rapid stroke, fluid flows from the first pressure chamber (32) and from the third pressure chamber (42) into the second pressure chamber (34) or from the second pressure chamber (34) and the third pressure chamber (42) into the first pressure chamber (32).

## Revendications

1. Système de serrage (10) avec au moins un élément de serrage (16) déplaçable dans un boîtier (12) le long d'une direction de serrage (14) entre une position d'ouverture et une position de butée, dans lequel l'élément de serrage (16) peut être sollicité avec une force de serrage dans la position de butée, avec une unité d'entraînement (22) pour fournir une force de levage pour déplacer l'élément de serrage (16) de la position d'ouverture dans la position de butée, dans lequel au moins un piston (24) est prévu, lequel comprend une première chambre de pression (32) pouvant être remplie de fluide et une deuxième chambre de pression (32) reliée directement à la première chambre de pression (32) par l'intermédiaire d'une conduite de liaison (36) s'étendant sur ou à travers le piston (24), pouvant également être remplie de fluide, dans lequel une soupape (38) est disposée dans la conduite de liaison (36), dans lequel du fluide s'écoule, lors du déplacement de l'élément de serrage (16) avec la force de levage fournie par l'unité d'entraînement (22), par l'intermédiaire de la conduite de liaison (36) de la première chambre de pression (32) dans la deuxième chambre de pression (34) ou de la deuxième chambre de pression (34) dans la première chambre de pression (32), **caractérisé en ce qu'**une unité de pompe (40) est en outre prévue et conçue pour augmenter la pression de travail dans la première chambre de pression (32) ou dans la deuxième chambre de pression (34) lors de ou après l'atteinte de la position de butée, afin de fournir la force de serrage.

2. Système de serrage (10) selon la revendication 1, dans lequel l'unité de pompe (40) est réalisée comme une micropompe et prévue à l'intérieur du boîtier (12).

3. Système de serrage (10) selon la revendication 1 ou 2, dans lequel la soupape (38) est réalisée comme une soupape de commutation ou un clapet anti-retour laquelle(lequel), lors du décalage de l'élément de serrage (16) dans la position de butée, s'ouvre en direction de la première chambre de pression (32) ou de la deuxième chambre de pression (34) et se ferme en direction de la deuxième chambre de pression (34) ou de la première chambre de pression (32).

4. Système de serrage (10) selon une revendication précédente, dans lequel le piston (24) présente un disque de piston (26) s'étendant perpendiculairement à la direction de serrage (14) et une tige de piston (28) s'étendant parallèlement à la direction de serrage (14), dans lequel le disque de piston (26) délimite la première chambre de pression (32) et la deuxième chambre de pression (34), et dans lequel la tige de piston (28) délimite une troisième chambre de pression (42).

5. Système de serrage (10) selon la revendication 4, dans lequel le volume de la première chambre de pression correspond à la somme des volumes de la deuxième chambre de pression et de la troisième chambre de pression, ou dans lequel le volume de la deuxième chambre de pression correspond à la somme des volumes de la première chambre de pression et de la troisième chambre de pression.

6. Système de serrage (10) selon la revendication 4 ou 5, dans lequel, lors du décalage de l'élément de serrage (16) dans la position de butée, du fluide s'écoule de la troisième chambre de pression (42) dans la première chambre de pression (32) ou la deuxième chambre de pression (34).

7. Système de serrage (10) selon l'une quelconque des revendications 4 à 6, dans lequel la troisième chambre de pression (42) peut être remplie d'un fluide pour décaler l'élément de serrage (16) dans la position d'ouverture.

8. Système de serrage (10) selon l'une quelconque des revendications 4 à 7, dans lequel le diamètre de disque (48) du disque de piston (26) s'étendant perpendiculairement à la direction de serrage (14) est plus grand que le diamètre de tige (52) de la tige de piston (28) s'étendant perpendiculairement à la direction de serrage (14).

9. Système de serrage (10) selon une revendication précédente, dans lequel une première partie de support (18) est disposée dans le boîtier (12), dans lequel la première chambre de pression (32), la deuxième chambre de pression (34), le disque de piston (26) et/ou la tige de piston (28) sont disposés dans la première partie de support (18), et/ou dans lequel la première partie de support (18) et/ou le piston (24) peuvent être décalés parallèlement à la direction de serrage (14).

10. Système de serrage (10) selon la revendication 9, dans lequel une deuxième partie de support (20) est disposée dans le boîtier (12), dans lequel le piston (24) présente un embout de piston (30) s'étendant parallèlement à la direction de serrage (14), lequel dépasse de la première partie de support (18) et s'insère dans la deuxième partie de support (20), et/ou dans lequel la deuxième partie de support (20) est peut être décalée parallèlement à la direction de serrage (14) .

11. Système de serrage (10) selon la revendication 10, dans lequel la première partie de support (18) est couplée en mouvement à un élément de serrage (16) et/ou la deuxième partie de support (20) est couplée en mouvement à un élément de serrage (16).

12. Système de serrage (10) selon une revendication précédente, dans lequel l'unité d'entraînement (22) comprend au moins un élément de ressort, dans lequel l'unité d'entraînement (22) est disposée entre le boîtier (12) et la première partie de support (18) et/ou entre le boîtier (12) et la deuxième partie de support (20) et/ou entre la première partie de support (18) et la deuxième partie de support (20).

13. Procédé pour faire fonctionner un système de serrage (10) avec au moins un élément de serrage (16) déplaçable entre une position d'ouverture et une position de butée, dans lequel l'élément de serrage (16) peut être sollicité avec une force de serrage dans la position de butée, dans lequel l'élément de serrage (16) est sollicité avec une force de levage fournie par une unité d'entraînement (22) pour déplacer l'élément de serrage (16) de la position d'ouverture dans la position de butée, dans lequel lors du déplacement de l'élément de serrage (16) avec la force de levage, du fluide s'écoule d'une première chambre de pression (32) délimitée par un piston (24) dans une deuxième chambre de pression (34) délimitée par le piston (24) ou de la deuxième chambre de pression (34) délimitée par le piston (24) dans la première chambre de pression (32) délimitée par le piston (24) directement par l'intermédiaire d'une conduite de liaison (36) s'étendant sur ou à travers le piston (24) et par l'intermédiaire d'une soupape (38) disposée dans la conduite de liaison (36), **caractérisé en ce que**, lors de ou après l'atteinte de la position de butée, la pression de travail dans la première chambre de pression (32) ou dans la deuxième chambre de pression (34) est augmentée au moyen d'une unité de pompe (40) supplémentaire pour fournir la force de serrage.

14. Procédé selon la revendication 13, **caractérisé en outre par** les étapes suivantes :
a. le décalage de l'élément de serrage (16) dans une course rapide dans la position de butée au moyen de l'unité d'entraînement (22) ;
b. la sollicitation de la première chambre de pression (32) ou de la deuxième chambre de pression (34) dans une course de force pour augmenter la force de serrage de l'élément de serrage (16) dans la position de butée au moyen de l'unité de pompe (40) ; et
c. l'ouverture active du système de serrage (10), en particulier de l'au moins un élément de serrage (16), de la position de butée dans la position d'ouverture par sollicitation d'une troisième chambre de pression (42) au moyen de l'unité de pompe (40) ou au moyen d'une autre unité de pompe (40).

15. Procédé selon l'une quelconque des revendications 13 ou 14, dans lequel la pression de travail est augmentée dans une troisième chambre de pression (42) pour décaler l'élément de serrage (16) dans la position d'ouverture.

16. Procédé selon l'une quelconque des revendications 14 ou 15, dans lequel, pendant la course rapide, du fluide s'écoule de la première chambre de pression (32) et de la troisième chambre de pression (42) dans la deuxième chambre de pression (34) ou de la deuxième chambre de pression (34) et la troisième chambre de pression (42) dans la première chambre de pression (32).
